# FASCICULE DE BREVET EUROPEEN

(11) **EP 2 084 049 B1**
(45) Date de publication et mention de la délivrance du brevet: **06.04.2016**
(21) Numéro de dépôt: 07866533.8
(22) Date de dépôt: 31.10.2007
(51) Int. Cl.: B62D 5/00

(54) **PROCEDE DE RESTITUTION D'EFFORT POUR DIRECTION A COMMANDE DECOUPLEE ET DISPOSITIF CORRESPONDANT**
KRAFTWIEDERGABEVERFAHREN FÜR LENKUNG OHNE MECHANISCHE VERBINDUNG ZUM RAD UND ENTSPRECHENDE VORRICHTUNG
EFFORT RESTITUTION METHOD FOR DECOUPLED CONTROL STEERING AND CORRESPONDING DEVICE

(30) Priorité: 29.11.2006 FR 0610442
(43) Date de publication de la demande: 05.08.2009
(73) Titulaire: Renault S.A.S., 92100 Boulogne-Billancourt (FR)
(72) Inventeur: BOUET, Christophe, 92370 Chaville (FR); TORRES, Guillaume, 27200 Vernon (FR); ROUYER, Daniel, 27490 Ecardenville Sur Eure (FR); AUVINET, Jannick, 27000 Evreux (FR)
(86) Numéro de dépôt international: PCT/FR2007/052292
(87) Numéro de publication internationale: WO 2008/065289

(56) Documents cités:
- EP-A- 1 415 893
- JP-A- 11 011 332

## Description

La présente invention concerne le domaine des directions à commande découplée, plus communément appelées "steer-by-wire". Elle s'intègre dans un véhicule automobile à roues découplées, c'est-à-dire un véhicule pour lequel il n'y a plus de liaison mécanique entre le volant de direction et les roues directrices.

Un dispositif de direction à commande découplée doit restituer des efforts sur la commande de direction ainsi que les butées droite/gauche correspondant aux butées mécaniques de braquage des roues.

Plus précisément, l'invention concerne, selon un premier de ses objets, un procédé de restitution d'effort sur une commande de direction d'un véhicule automobile équipé d'un volant de direction et d'une direction à commande découplée,
comprenant les étapes consistant à :
- Mesurer l'angle du volant de direction, et
- Restituer une butée variable sur le volant de direction, calculer une donnée de saturation de pneumatiques équipant le véhicule, asservir la restitution de la butée variable à la valeur de la donnée de saturation des pneumatiques dans lequel l'étape de calcul de la donnée de saturation des pneumatiques comprend une étape consistant à mesurer l'effort aux roues caractérisé en ce que l'effort aux roues est déterminé directement par la mesure de la puissance délivrée par un actionneur de braquage de roues.

JP1111332 divulgue un procédé conformément au préambule de la revendication 1.

Le contrôle de stabilité par action sur le volant de direction est connu de l'homme du métier, notamment par l'exemple qu'en donne le document de l'état de la technique antérieure US 2002 0108805. Ce document divulgue l'application d'un couple résistant sur le volant par l'intermédiaire de la direction électrique, sur détection de la vitesse de lacet.

Il est connu également le document US 66629898 qui écrit une solution agissant sur le braquage des roues par estimation de la dérive.

Toutefois, les solutions développées sont plutôt complexes.

La présente invention a pour but de remédier à ces inconvénients en proposant une solution particulièrement simple à mettre en oeuvre.

Avec cet objectif en vue, le procédé selon l'invention, par ailleurs conforme au préambule cité ci-avant, est essentiellement caractérisé en ce que l'effort aux roues est déterminé directement par la mesure de la puissance délivrée par un actionneur de braquage de roues.

Grâce à cette configuration, l'invention peut être mise en oeuvre quel que soit le type de véhicule. En outre, l'invention peut être mise en ouvre sans calcul de la vitesse du véhicule.

Grâce à cette configuration, l'invention peut être mise en oeuvre sans qu'un modèle de référence ne soit obligatoire.

De préférence, la butée est restituée quand l'effort aux roues n'augmente plus, après avoir préalablement augmenté.

Grâce à cette configuration, l'invention peut être mise en oeuvre pour tout type de véhicule automobile, et quel que soit le type de pneumatiques.

Dans un mode de réalisation, la butée est restituée quand l'effort aux roues n'est plus proportionnel à l'angle de braquage des roues, après l'avoir été.

Dans un mode de réalisation, l'étape de restitution de la butée comprend une étape consistant à générer un couple, au niveau d'un actionneur de volant de direction, s'opposant à celui du braquage de ce volant de direction.

De préférence, le couple généré pour simuler une butée est supérieur ou égal à celui exercé par le conducteur du véhicule automobile.

La présente invention concerne également, selon un deuxième de ses objets, un dispositif de direction à commande découplée pour véhicule automobile, susceptible de mettre en oeuvre le procédé selon l'invention, comprenant :
- un volant de direction,
- un actionneur de volant de direction,
- un actionneur de braquage de roues,
- des moyens de mesure du braquage des roues,
- des moyens pour générer une butée variable sur le volant de direction
- des moyens pour calculer une donnée de saturation de pneumatiques équipant le véhicule,
- des moyens de commande configurés pour commander la génération de la butée variable sur le volant de direction quand les moyens de mesure du braquage des roues détectent un franchissement d'un angle de braquage des roues seuil, et asservir la restitution de la butée variable à la valeur de la donné de saturation des pneumatiques, et
- des moyens pour déterminer l'effort aux roues directement par la mesure de la puissance délivrée par l'actionneur de braquage de roues.

De préférence, l'angle seuil dépend de la mesure d'effort aux roues, par l'actionneur de braquage des roues.

Dans un mode de réalisation, les moyens pour générer une butée variable sont intégrés à l'actionneur de volant de direction.

De préférence, la butée variable est une butée virtuelle, simulée par la génération d'un couple, au niveau de l'actionneur de volant de direction, s'opposant à celui du braquage du volant de direction.

L'invention concerne également un véhicule automobile équipé du dispositif selon l'invention.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 représente un mode de réalisation du procédé selon l'invention,
- la figure 2 représente un mode de réalisation du dispositif selon l'invention,
- la figure 3 représente le logigramme selon l'invention,
- la figure 4 représente la zone d'utilisation du volant en fonction de la vitesse en régime permanent, et
- la figure 5 représente l'évolution de l'effort aux roues en fonction de l'angle de braquage.

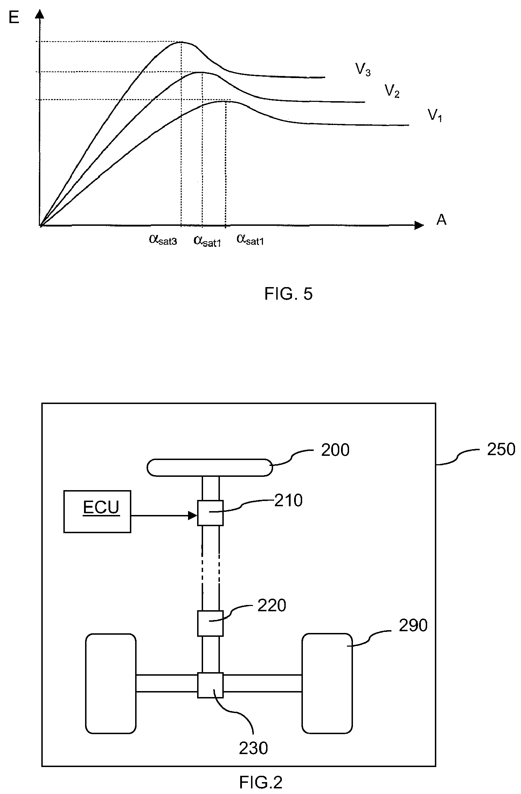

Le comportement d'un véhicule automobile classique en virage est illustré à la figure 5.

Sur cette figure 5, on représente, pour une adhérence donnée, l'évolution de l'effort aux roues directrices E en fonction de l'angle α des roues, pour trois vitesses V1, V2, V3 différentes et telles que V3 > V2 > V1.

Dans une première phase, l'évolution de l'effort est linéaire, c'est-à-dire que l'effort aux roues est proportionnel à l'angle de braquage des roues, jusqu'à une donnée de saturation correspondant à un maximum αₛₐₜ à partir duquel, dans une deuxième phase, l'effort aux roues décroit en fonction de l'angle de braquage, pour se stabiliser dans une troisième phase à une valeur sensiblement constante.

A partir du maximum αₛₐₜ, le véhicule est considéré comme instable et en sous-virage pendant la troisième phase. Plus la vitesse augmente, plus le maximum correspondant diminue. Soient αₛₐₜ₁, αₛₐₜ₂, et αₛₐₜ₃ les maxima correspondant aux vitesses V1, V2 et V3 respectivement, on a αₛₐₜ₃ < αₛₐₜ₂ < αₛₐₜ₁. Autrement dit, plus un véhicule roule vite, plus le risque de sous-virage est grand à partir d'un faible angle de braquage.

Il est donc souhaitable que le véhicule reste dans la première phase dans laquelle l'effort aux roues est proportionnel à l'angle de braquage des roues.

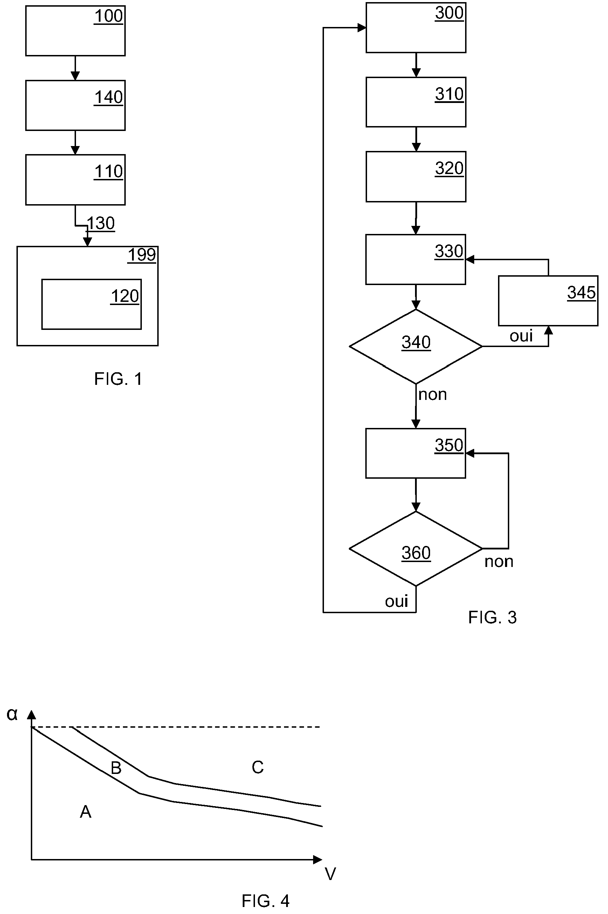

Dans ce contexte, le logigramme de la stratégie de commande selon l'invention est illustrée en figure 3.

Lorsqu'un conducteur désire changer de direction, celui-ci tourne le volant de direction dans le sens approprié, d'un certain angle. Cette volonté est traduite par la mesure de l'angle du volant à l'étape 300.

La mesure de l'angle du volant, étape 300, est corrélée au calcul de la position ou de l'angle des roues (braquage) désirée par le conducteur, étape 310. La corrélation entre l'angle du volant et l'angle de braquage des roues est effectuée de manière connue de l'homme du métier.

Ce calcul de braquage, étape 310, amène au braquage des roues proprement dit, étape 330, jusqu'à l'angle désiré, et à la mesure de l'effort aux roues, étape 320. La mesure de l'effort aux roues peut être effectuée en continu, ou déclenchée par le dépassement d'un angle seuil du volant de direction ou des roues.

A ce stade, c'est-à-dire pendant le braquage, et éventuellement jusqu'à l'angle désiré, l'évolution de l'effort aux roues est mesurée à l'étape 340.

Si l'effort aux roues augmente, on considère que les pneumatiques n'ont pas encore atteint leur limite d'adhérence, et qu'il n'est pas nécessaire d'appliquer la butée, étape 345. Le braquage peut donc éventuellement continuer, avec une boucle retour à l'étape 330 couplée à l'étape 320 de mesure de l'effort aux roues.

Si l'effort aux roues n'augmente pas, on considère que les pneumatiques ont atteint leur limite d'adhérence, et qu'il convient d'appliquer la butée selon l'invention à l'étape 350.

La limite d'adhérence correspond dans ce cas à l'angle maximum αₛₐₜ évoqué ci-dessus, au-delà duquel l'effort aux roues n'est plus proportionnel à l'angle de braquage des roues.

La butée est appliquée à l'actionneur de commande de direction, comme décrit ultérieurement en référence à la figure 2.

Lorsque la butée est appliquée à l'étape 350, l'évolution de l'effort aux roues est de nouveau mesurée à l'étape 360.

Si l'effort aux roues n'augmente pas, la butée est maintenue. C'est-à-dire que la butée est maintenue tant que l'effort aux roues n'augmente pas. Si les pneumatiques ont atteint leur limite d'adhérence, il n'est pas utile, voire pas souhaitable en effet que le conducteur puisse continuer à tourner le volant de direction.

Dans cette configuration, on peut également prévoir de munir le véhicule automobile, en outre, de moyens de débraquage.

Si l'effort aux roues augmente, on considère que les pneumatiques ont retrouvé de l'adhérence et la butée est retirée.

Ainsi, si le seuil limite d'effort est atteint (effort correspondant à l'angle maximal αₛₐₜ), et que la demande de braquage provenant du conducteur augmente, l'invention permet d'empêcher ce braquage, en l'espèce excessif, et de maintenir l'effort généré à son maximum, éventuellement en continu, par la génération d'une butée sur l'actionneur de volant de direction.

Le logigramme de la stratégie de commande définit le fonctionnement du dispositif selon l'invention. Lorsque la butée est retirée, le fonctionnement est réinitialisé à la mesure de l'angle du volant 300.

En lien avec le logigramme susmentionné, un mode de réalisation du procédé selon l'invention est illustré figure 1.

Dans une première étape, l'angle du volant de direction est mesuré, étape 100. A cet angle correspond un angle de braquage des roues.

L'effort aux roues est mesuré à l'étape 140.

La saturation des pneumatiques est alors calculée à l'étape 110.

Une butée variable est restituée, étape 199, sur le volant de direction en fonction du résultat du calcul de la saturation des pneumatiques, c'est-à-dire que l'on asservit la restitution de la butée variable à la saturation des pneumatiques, étape 130.

De préférence, l'étape de restitution de la butée 199 comprend une étape consistant à générer un couple 120, au niveau d'un actionneur de volant de direction, s'opposant à celui du braquage du volant de direction.

Le dispositif selon l'invention est illustré figure 2. Il est susceptible de mettre en oeuvre le procédé selon l'invention et son fonctionnement a été décrit selon le logigramme illustré figure 3.

Le dispositif selon l'invention comprend un volant de direction 200 au sein d'un véhicule automobile 250. Le volant de direction est relié à un actionneur de volant de direction 210, en général par l'intermédiaire d'un premier arbre.

Le dispositif selon l'invention comprend également un deuxième actionneur, en l'espèce un actionneur de braquage de roues 220, configuré pour faire pivoter les roues 290 d'un angle donné, dépendant principalement de l'angle de rotation du volant de direction.

L'effort aux roues est avantageusement déterminé directement par la mesure de la puissance délivrée par l'actionneur de braquage de roues 220.

Le dispositif selon l'invention comprend également des moyens de mesure du braquage des roues 230, en l'espèce un capteur d'angle de roues. Ces moyens de mesure 230 peuvent être intégrés dans l'actionneur de braquage de roues 220 ou dans l'actionneur de direction 210.

En outre, on dispose de moyens pour générer une butée variable sur le volant de direction.

De préférence, les moyens pour générer une butée variable sur le volant de direction sont intégrés à l'actionneur de volant de direction 210. C'est-à-dire que l'actionneur de direction 210 est configuré pour appliquer une butée variable.

La butée variable est une butée virtuelle, simulée par la génération d'un couple s'opposant à celui du braquage du volant de direction, et dont la valeur est supérieure ou égale à celle du couple exercé par le conducteur.

Les moyens pour générer une butée variable sur le volant de direction sont commandés par des moyens de commande non représentés, par exemple un calculateur spécifique ou le bloc de commande électronique (ECU) du véhicule automobile.

Les moyens de commande sont configurés pour commander la génération de la butée variable au niveau de l'actionneur du volant de direction quand les pneumatiques sont en saturation.

La saturation des pneumatiques est déterminée, comme précédemment, par la détection d'un seuil au-delà duquel l'effort aux roues n'est plus proportionnel à l'angle de braquage des roues.

Une autre illustration du seuil est donnée figure 4. La figure 4 représente la zone d'utilisation du volant, c'est-à-dire l'angle α du volant de direction en fonction de la vitesse V en régime permanent, pour un véhicule classique dans lequel l'invention n'est pas mise en oeuvre.

La figure 4 illustre trois zones A à C.

La zone A représente une zone dite de régime permanent, c'est-à-dire la zone d'utilisation normale, non dangereuse, du volant.

La zone A correspond à la première phase de la figure 5, dans laquelle l'évolution de l'effort est linéaire, c'est-à-dire que l'effort aux roues est proportionnel à l'angle de braquage des roues.

La zone B représente une zone dite non linéaire, dans laquelle les pneumatiques atteignent leur limite d'adhérence, c'est-à-dire que le véhicule risque d'être en sous-virage.

La zone B correspond à la deuxième phase de la figure 5, dans laquelle le comportement du véhicule est instable.

La zone C représente une zone dite dangereuse, dans laquelle les pneumatiques ont dépassé leur limite d'adhérence, c'est-à-dire que le véhicule est en sous-virage.

La zone C correspond à la troisième phase de la figure 5.

A partir d'un point donné de la zone A, si la vitesse est fixe mais que l'angle du volant augmente au-delà de l'angle maximum αₛₐₜ à partir duquel l'effort aux roues n'est plus proportionnel à l'angle de braquage des roues (voir figure 5), ou si l'angle est fixe mais que la vitesse augmente, au-delà d'un certain seuil (vitesse correspondant à l'angle maximum αₛₐₜ), le véhicule passe de la zone A à la zone B.

L'invention consiste à appliquer la butée lorsque le véhicule automobile passe en zone non linéaire.

Dans un mode de réalisation, l'invention peut s'affranchir de la mesure de l'effort aux roues. Dans cette configuration, le comportement du véhicule représenté à la figure 5 constitue un modèle de référence à partir duquel la butée est appliquée lors du franchissement de la zone non linéaire.

Ce mode de réalisation est un peu plus complexe en ce qu'il nécessite un modèle de référence, et en ce que le modèle peut dépendre du type de véhicule, et du type de pneumatiques.

## Revendications

1. Procédé de restitution d'effort sur une commande de direction d'un véhicule automobile équipé d'un volant de direction et d'une direction à commande découplée,
comprenant les étapes consistant à :
- Mesurer l'angle du volant de direction (100), et
- Restituer une butée variable (199) sur le volant de direction,
- Calculer une donnée de saturation de pneumatiques (110) équipant le véhicule, et
- Asservir la restitution de la butée variable à la valeur de la donnée de saturation des pneumatiques (130),
dans lequel l'étape de calcul de la donnée de saturation des pneumatiques comprend une étape consistant à mesurer l'effort aux roues (140),
**caractérisé en ce que** l'effort aux roues est déterminé directement par la mesure de la puissance délivrée par un actionneur de braquage de roues.

2. Procédé selon la revendication 1, dans lequel la butée est restituée quand l'effort aux roues n'augmente plus, après avoir préalablement augmenté.

3. Procédé selon la revendication 1, dans lequel la butée est restituée quand l'effort aux roues n'est plus proportionnel à l'angle de braquage des roues, après l'avoir été.

4. Procédé selon l'une quelconque des revendications précédentes, dans lequel l'étape de restitution de la butée (199) comprend une étape consistant à générer un couple (120) sur un actionneur du volant de direction, s'opposant à celui du braquage de ce volant de direction.

5. Dispositif de direction à commande découplée pour véhicule automobile, susceptible de mettre en oeuvre le procédé selon l'une quelconque des revendications précédentes, comprenant :
- un volant de direction (200),
- un actionneur de volant de direction (210),
- un actionneur de braquage de roues (220),
- des moyens de mesure du braquage des roues (230),
- des moyens pour générer une butée variable sur le volant de direction,
**caractérisé en ce qu'**il comprend
- des moyens pour calculer une donnée de saturation de pneumatiques (110) équipant le véhicule,
- des moyens de commande (ECU) configurés pour commander la génération de la butée variable sur le volant de direction quand les moyens de mesure du braquage des roues (230) détectent un franchissement d'un angle de braquage des roues seuil (αₛₐₜ), et asservir la restitution de la butée variable à la valeur de la donnée de saturation des pneumatiques, et
- des moyens pour déterminer l'effort aux roues directement par la mesure de la puissance délivrée par l'actionneur de braquage de roues.

6. Dispositif selon la revendication 5, dans lequel l'angle seuil (αₛₐₜ) dépend de la mesure d'effort aux roues par l'actionneur de braquage des roues.

7. Dispositif selon l'une quelconque des revendications 5 ou 6, dans lequel les moyens pour générer une butée variable sont intégrés à l'actionneur de volant de direction (210).

8. Dispositif selon l'une quelconque des revendications 5 à 7, dans lequel la butée variable est une butée virtuelle, simulée par la génération d'un couple, au niveau de l'actionneur de volant de direction (210), s'opposant à celui du braquage du volant de direction.

9. Véhicule automobile (250) équipé du dispositif selon l'une quelconque des revendications 5 à 8.

## Patentansprüche

1. Verfahren zur Kraftwiedergabe an einer Lenksteuerung eines Kraftfahrzeugs, das mit einem Lenkrad und mit einer Steer-by-Wire-Lenkung ausgestattet ist,
das die Schritte enthält, die darin bestehen:
- den Winkel des Lenkrads zu messen (100), und
- einen variablen Anschlag (199) am Lenkrad wiederzugeben,
- einen Sättigungsdatenwert von das Fahrzeug ausstattenden Luftreifen (110) zu berechnen, und
- die Wiedergabe des variablen Anschlags dem Wert des Sättigungsdatenwerts der Luftreifen (130) unterzuordnen,
wobei der Berechnungsschritt des Sättigungsdatenwerts der Luftreifen einen Schritt enthält, der darin besteht, die Kraft an den Rädern zu messen (140),
**dadurch gekennzeichnet, dass** die Kraft an den Rädern direkt durch die Messung der von einem Radeinschlag-Stellantrieb gelieferten Leistung bestimmt wird.

2. Verfahren nach Anspruch 1, wobei der Anschlag wiederhergestellt wird, wenn die Kraft an den Rädern nicht mehr zunimmt, nachdem sie vorher zugenommen hat.

3. Verfahren nach Anspruch 1, wobei der Anschlag wiederhergestellt wird, wenn die Kraft an den Rädern nicht mehr zum Einschlagwinkel der Räder proportional ist, nachdem sie es vorher war.

4. Verfahren nach einem der vorhergehenden Ansprüche, wobei der Schritt der Wiedergabe des Anschlags (199) einen Schritt enthält, der darin besteht, ein Drehmoment (120) an einem Stellantrieb des Lenkrads zu erzeugen, das demjenigen des Einschlags dieses Lenkrads entgegengesetzt ist.

5. Steer-by-Wire-Lenkvorrichtung für ein Kraftfahrzeug, die das Verfahren nach einem der vorhergehenden Ansprüche anwenden kann, die enthält:
- ein Lenkrad (200),
- einen Lenkrad-Stellantrieb (210),
- einen Radeinschlag-Stellantrieb (220),
- Einrichtungen zur Messung des Radeinschlags (230),
- Einrichtungen zur Erzeugung eines variablen Anschlags auf dem Lenkrad,
**dadurch gekennzeichnet**, das sie enthält:
- Einrichtungen zur Berechnung eines Sättigungsdatenwerts von das Fahrzeug ausstattenden Luftreifen (110),
- Steuereinrichtungen (ECU), die konfiguriert sind, um die Erzeugung des variablen Anschlags auf dem Lenkrad zu steuern, wenn die Einrichtungen zur Messung des Radeinschlags (230) eine Überschreitung eines Schwelleinschlagwinkels der Räder (αₛₐₜ) erfassen, und um die Wiedergabe des variablen Anschlags dem Wert des Sättigungsdatenwerts der Luftreifen unterzuordnen, und
- Einrichtungen zur Bestimmung der Kraft an den Rädern direkt durch die Messung der durch den Radeinschlag-Stellantrieb gelieferten Leistung.

6. Vorrichtung nach Anspruch 5, wobei der Schwellwinkel (αₛₐₜ) von der Kraftmessung an den Rädern durch den Einschlag-Stellantrieb der Räder abhängt.

7. Vorrichtung nach einem der Ansprüche 5 oder 6, wobei die Einrichtungen zur Erzeugung eines variablen Anschlags in den Lenkrad-Stellantrieb (210) integriert sind.

8. Vorrichtung nach einem der Ansprüche 5 bis 7, wobei der variable Anschlag ein virtueller Anschlag ist, der durch die Erzeugung eines Drehmoments, im Bereich des Lenkrad-Stellantriebs (210), simuliert wird, das demjenigen des Einschlags des Lenkrads entgegengesetzt ist.

9. Kraftfahrzeug (250), das mit der Vorrichtung nach einem der Ansprüche 5 bis 8 ausgestattet ist.

## Claims

1. Method for the restitution of effort to a steering control of a motor vehicle equipped with a steering wheel and with steer-by-wire steering,
comprising the steps involving:
- measuring the steering wheel angle (100), and
- restituting a variable end stop (199) on the steering wheel,
- calculating a tyre saturation data item (110) for the tyres with which the vehicle is fitted, and
- slaving the restitution of the variable end stop to the value of the tyres saturation data item (130),
in which method the step of calculating the tyres saturation data item comprises a step consisting in measuring the effort at the wheels (140),
**characterized in that** the effort at the wheels is determined directly by measuring the power delivered by a steering actuator that turns the wheels.

2. Method according to Claim 1, in which the end stop is restituted when the effort at the wheels is no longer increasing, having previously increased.

3. Method according to Claim 1, in which the end stop is restituted when the effort at the wheels is no longer proportional to the steering angle of the wheels, having previously been so.

4. Method according to any one of the preceding claims, in which the step of restituting the end stop (199) comprises a step consisting in generating a torque (120) on an actuator of the steering wheel, which opposes the steering torque of this steering wheel.

5. Steer-by-wire steering device for a motor vehicle, capable of implementing the method according to any one of the preceding claims, comprising:
- a steering wheel (200),
- a steering wheel actuator (210),
- a steering actuator for turning the wheels (220),
- means for measuring the turning of the wheels (230),
- means for generating a variable end stop on the steering wheel,
**characterized in that** it comprises
- means for calculating a tyres saturation data item (110) for the tyres with which the vehicle is fitted,
- control means (ECU) configured to command the generation of the variable end stop on the steering wheel when the means for measuring the turning of the wheels (230) detect that a threshold wheels steering angle (αₛₐₜ) has been crossed, and slaving the restitution of the variable end stop to the value of the tyres saturation data item, and
- means for determining the effort at the wheels directly by measuring the power delivered by the steering actuator that turns the wheels.

6. Device according to Claim 5, in which the threshold angle (αₛₐₜ) depends on the measurement of effort at the wheels via the steering actuator that turns the wheels.

7. Device according to either one of Claims 5 and 6, in which the means for generating a variable end stop are incorporated into the steering wheel actuator (210).

8. Device according to any one of Claims 5 to 7, in which the variable end stop is a virtual end stop simulated by the generation of a torque, at the steering wheel actuator (210) that opposes the steering wheel steering torque.

9. Motor vehicle (250) equipped with the device according to any one of Claims 5 to 8.
